# EUROPEAN PATENT APPLICATION

(11) **EP 0 692 336 A1**
(43) Date of publication of application: **17.01.1996**
(21) Application number: 94904321.0
(22) Date of filing: 14.01.1994
(51) Int. Cl.: B23K 31/00, B23K 9/23, B23K 35/00

(54) **WELDING METHOD AND WELDED STRUCTURE FOR FORMING PASSIVATED CHROMIUM OXIDE FILM ON WELD**

(30) Priority: 18.01.1993 JP 5438/93
(71) Applicant: OHMI, Tadahiro, Sendai-shi Miyagi-ken 980 (JP)
(72) Inventor: OHMI, Tadahiro, Sendai-shi Miyagi-ken 980 (JP)
(74) Representative: Weitzel, Wolfgang, Dr.-Ing. Patentanwalt
(86) International application number: JP9400045
(87) International publication number: WO9415749

(57) **Abstract**

This invention provides a welding method capable of forming on a weld of the material to be welded and in the vicinity thereof in the step of welding a passivated chromium oxide film an outer surface of which has excellent corrosion resisting, a capability of substantially preventing the adsorption of water onto the outer surface, and a capability of permitting water, even when it is adsorbed onto the surface, to be removed simply with low energy; and a welded structure having the same film. A welding method for forming a passivated chromium oxide film on a weld of each material to be welded, consisting of the steps of forming a chromium-containing film at the end of the material which has on its outer surface a passivated oxide film formed by thermal treatment and containing chromium as the main component, setting face to face with each other the ends of the materials thus coated, and welding these ends, whereby a passivated oxide film containing chromium oxide as the main component which has a high corrosion resistance and which does not substantially provide outgassing can be formed on the outer surface of the weld.

## Description

### Technical Field

The present invention relates to a welding method and a welded structure for forming a passivated chromium oxide film on a weld.

### Background Art

The increase in the scale of integration and in the performance of semiconductor devices is rapidly advancing, and processing apparatuses capable of responding to these needs are required; great efforts have thus been made in order to produce an atmosphere having a higher degree of vacuum and greater cleanliness.

In order to product an ultra high vacuum and ultra clean atmosphere, it is necessary not merely to reduce the leakage amount and to reduce the dead space, but also to completely suppress outgassing from the inner surfaces of the processing apparatuses and the gas supply piping system. As a result of the research and development activities stretching over many years of the present inventors, it has become possible to form on surfaces an oxide passivated film having chromium oxide as a main component thereof which is corrosion resistant and which reduces outgassing from the surface in the extreme. As a result, it has become possible to produce an atmosphere in which outgassing from the interior of the processing apparatus has been reduced to such a small amount as to be difficult to detect using current measuring instruments.

However, as apparatuses have become larger in scale and more complex, it has become increasingly necessary to accomplish connections between pipes and apparatuses the like by means of welding after the formation of a chromium oxide passivated film. Since the surfaces of the welds are not covered by oxide passivated films, gas is easily adsorbed and released, and as the number of welds increases, outgassing released from them can no longer be ignored, and a new problem is created in that the atmosphere becomes contaminated.

Furthermore, in apparatuses or piping systems in which corrosive gas is employed, there is a problem in that the weld are corroded, and as a result thereof, the atmosphere is contaminated.

The formation of chromium oxide passivated films in apparatuses or piping systems which are large and have complex shapes requires passivated film formation apparatuses which are also complex, and there are large costs involved, so that the development of a welding method which permits the formation of a passivated film simultaneously with the welding has been strongly desired.

In view of the above points, the present invention has as an object thereof to provide a welding method and a welded structure which make possible the formation, during the welding process and on welds and in the vicinity thereof, of a chromium oxide passivated film having a surface which has superior corrosion resistance, which adsorbs little amounts of water, and which makes possible the removal of any water which should adsorb in a simple manner and using low energy.

### Disclosure of the Invention

The welding method in accordance with the present invention is characterized in that a film containing chromium is formed on the ends of material which is to be welded having on the surface thereof an oxide passivated film formed by thermal treatment and having chromium as a main component thereof, setting the materials to be welded face to face with each other and conducting welding, thereby forming on the weld surface an oxide passivated film containing chromium oxide as a main component thereof which has corrosion resistance and which has very little outgassing.

Furthermore, the welding method in accordance with the present invention is characterized in that the ends of materials to be welded having on the surface thereof oxide passivated films formed by thermal treatment and having chromium as a main component thereof are set face to face with an inserted material comprising an alloy containing chromium interposed therebetween, and welding is conducted, and thereby an oxide passivated film having chromium oxide as a main component thereof which has chromium resistance and very little outgassing is formed on the weld surface.

The welded structure in accordance with the present invention is characterized in that an oxide passivated film having chromium oxide as a main component thereof and which has corrosion resistance and very little outgassing is formed on the weld surface in the as-welded state.

### Function

During welding, by forming a chromium coating on the ends to be joined, it is possible to form an oxide passivated film having chromium oxide as a main component thereof on the surface simultaneously with welding.

Furthermore, during welding, by executing welding while interposing in the portion set face to face an inserted material comprising an alloy containing chromium, it is possible to form an oxide passivated film having chromium oxide as a main component on the surface simultaneously with welding.

### Embodiment Examples

### (Material to be Welded)

Stainless steel may be appropriately used as the material for the material to be welded in the present invention. In particular, SUS316L is preferable from the point of view of the effects of the present invention. Furthermore, it is preferable that the Mn component in the SUS316L be less than or equal to 0.8 weight percent, and a level of 0.24 weight percent or less is further preferable. When stainless steel in which the level of Mn has been controlled in this manner is employed, the corrosion resistance is further improved.

No particular restriction is made with respect to the shape of the materials to be welded; for example, tubes, plates, bars, or the like may be employed.

### (Passivated Film)

It is preferable that the formation of the passivated film on the materials to be welded be conducted, for example, by means of the following methods.
(1) A method in which, after the surfaces of the stainless steel are subjected to an electropolishing treatment, baking is conducted, and then thermal treatment at a temperature of 400°C or more in an oxidizing gas atmosphere of 1 ppb or less is conducted.
   By means of this method, it is possible to form an oxide film having chromium as a main component thereof.
(2) A method in which, after the surfaces of the stainless steel have been subjected to electropolishing treatment, oxidation treatment is conducted in an oxidizing atmosphere gas, and then the iron oxides on the surface are reduced and removed by means of hydrogen gas.
   Here, after the electropolishing treatment, it is preferable that thermal treatment be conducted in an inert gas atmosphere and at a temperature within a range of 300-600°C (more preferably, 200-500°C) prior to oxide film formation.
   Furthermore, in the hydrogen gas treatment, it is preferable that the hydrogen concentration in the gas atmosphere be within a range of 0.1 ppm-10%.
   Furthermore, it is preferable that after the hydrogen gas treatment, an annealing treatment be conducted in an inert gas, and it is preferable that the conditions of this inert gas annealing treatment be such that the temperature is within a range of 200-500°C, and the period is 1-10 hours.
   When this method is employed, it is possible to form an oxide passivated film such that the degree of surface roughness is such that Rₘₐₓ is 0.1µm or less (0.01µm or less is also possible), the Cr/Fe (atomic ratio) on the surface of the passivated film is larger than the Cr/Fe in the base metal, and furthermore, the Cr/Fe ratio at the surface of the passivated film is 1 or more.
(3) A method in which electropolishing of the stainless steel is conducted, then water is released from the surface of the stainless steel by means of conducting baking in an inert gas, and then, thermal treatment is conducted at a temperature within a range of 300°C - 600°C in a gas atmosphere in which less than 4 ppm of oxygen or less than 500 ppb of water are contained in hydrogen gas or a mixed gas of hydrogen gas and inert gas.
(4) A method in which a worked distorted layer comprising microcrystals is formed on the surface of the stainless steel base metal, then water is removed from the surface of the stainless steel by conducting baking in an inert gas atmosphere, and then thermal treatment is conducted at a temperature within a range of 450°C - 600°C in a mixed gas atmosphere of an inert gas and an amount of H₂O gas within a range of 500 ppb-2%.

By means of this, it is possible to form an oxide passivated film having a thickness of 20Å or more on the outermost surface of the layer having chromium oxide as a main component thereof.

### (Chromium Coating)

A plating method, a vapor deposition method, a CVD method, or the like, for example, may be employed as the method for the formation of the chromium coating.

It is preferable that the thickness of the film is 0.1 µm or more. When the thickness is less than 0.1 µm, depending on the welding conditions, after welding, a passivated film having chromium oxide as a main component may not be formed on the weld surface.

Furthermore, the amount of chromium contained in the film varies with the film thickness; however, it is preferable that this amount be 25 weight percent or more.

It is preferable that the coating be 10 mm or less from the end surface. When this distance is in excess of 10 mm, the surface roughness increases, and accordingly, an improvement in the gas release characteristics may not be possible.

### (Inserted Material)

The material of the insert ring is extremely important from the point of view of the formation of an oxide passivated film on the weld; it is desirable that this material contain chromium in an amount of 25 weight percent or more.

Furthermore, the thickness of the inserted material is important from the point of view of the surface roughness of the bead surface and determining the heat input; a range of 5 mm or less is desirable.

### (Welding Conditions)

Welding methods employable in the present invention include methods using, for example, discharge, or lasers. Examples of methods employing a discharge include, for example, tungsten inert gas (TIG) welding, arc gas welding, and the like.

A stainless steel welding method, characterized in that the amount of heat input into the weld is 600 joules/cm or less.

Furthermore, concretely, it is preferable that welding be conducted at a welding rate of 20 cm/min or more. In such a case, it is preferable that welding be conducted while applying a magnetic field having a vertical component with respect to the surface of the weld. Furthermore, it is preferable that strength of the magnetic field at the weld be 50 Gauss or more.

Furthermore, when the materials welded are pipes, it is preferable that the welded bead width in the interior of the pipes be 1 mm or less. By means of this, it is possible to achieve a reduction in the amount of Mn contained in the fumes, and it is possible to obtain a highly clean weld surface.

### (Welded Structure)

Using the welded structure in accordance with the present invention, it is possible to achieve processing apparatuses having a variety of structures. Here, what is meant by processing apparatuses are semiconductor manufacturing apparatuses, superconducting thin film manufacturing apparatuses, magnetic thin film manufacturing apparatuses, metallic thin film manufacturing apparatuses, dielectric thin film manufacturing apparatuses, and the like; for example, film formation apparatuses and treatment apparatuses employing, for example, sputtering, vapor deposition, CVD, PCVD, MOCVD, MBE, dry etching, ion implantation, diffusion and oxidation furnaces, and the like, and furthermore, evaluating apparatuses employing, for example, Auger electron spectroscopy, XPS, SIMS, RHEED, TREX, and the like. Furthermore, piping systems for supplying gas to such apparatuses and ultra pure water manufacturing and supply apparatuses are also included in such processing apparatuses.

### Brief Description of the Drawings

Figure 1 is a cross sectional view and a perspective view showing the welding method in accordance with Embodiment 1.

Figure 2 is an XPS diagram relating to Embodiment 1.

Figure 3 is an XPS diagram relating to a comparative Embodiment 1.

Figure 4 is a graph showing CR distribution relating to Embodiment 1.

Figure 5 is a cross sectional view and a perspective view showing a welding method in accordance with Embodiment 2.

Figure 6 is an XPS diagram relating to Embodiment 2.

Figure 7 is an XPS diagram relating to a comparative Example 2.

Figure 8 is a graph showing Cr distribution relating to Embodiment 2.

### Best Mode for Carrying Out the Invention

Hereinbelow, the present invention will be explained in detail using embodiments.

It is of course the case that the scope of the present invention is not restricted to the embodiments described hereinbelow. Design modifications and technologies in which the numerical values are restricted, for example, executed by those skilled in the art are also included in the scope of the present invention.

### (Embodiment 1)

After subjecting SUS316L pipes having a diameter of 1/4 inch (6.35mm) to electropolishing, oxidation treatment was conducted in an atmosphere of hydrogen and argon gas having a moisture concentration of 10 ppm, and an oxide passivated film containing a large amount of chromium was formed on the inner surfaces thereof.

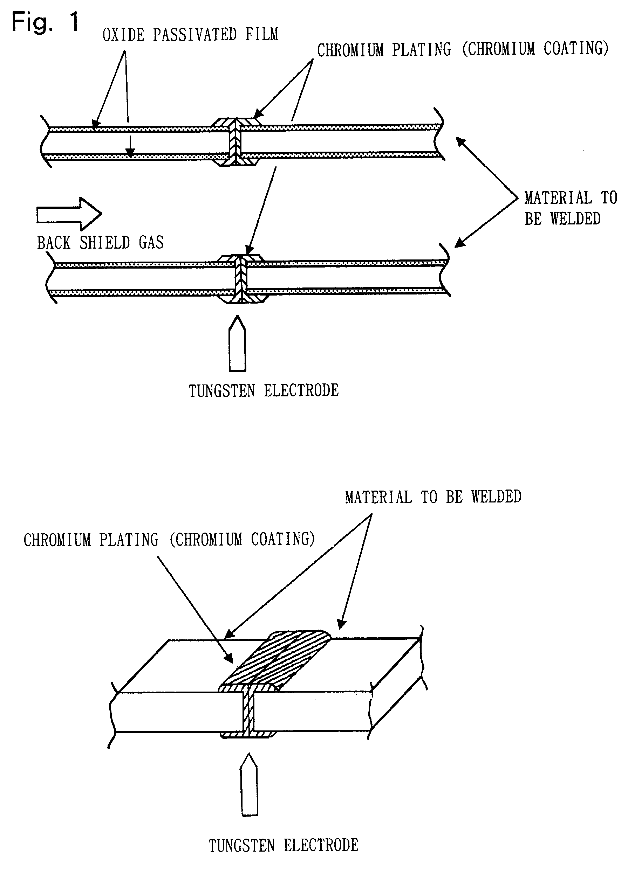

Next, a chromium plating treatment resulting in a thickness of 0.1 µm was conducted on 0.5 mm of both pipe ends. The plating treatment conditions were as shown below.
Plating bath: CrO₃: H₂SO₄ = 100:1
Bath temperature: 45°C - 55°C
Voltage: DC 4V
Current density: 10 - 40 A/dm²
Treatment period: 15 min (film thickness of 10 µm)
After this, both pipe ends were set face to face, and the pipes which had been subjected to a chromium plating treatment were welded by means of a tungsen inert gas welding method. During welding, Ar gas containing H₂ was employed as a back shield gas. The welding method is shown in Figure 1.

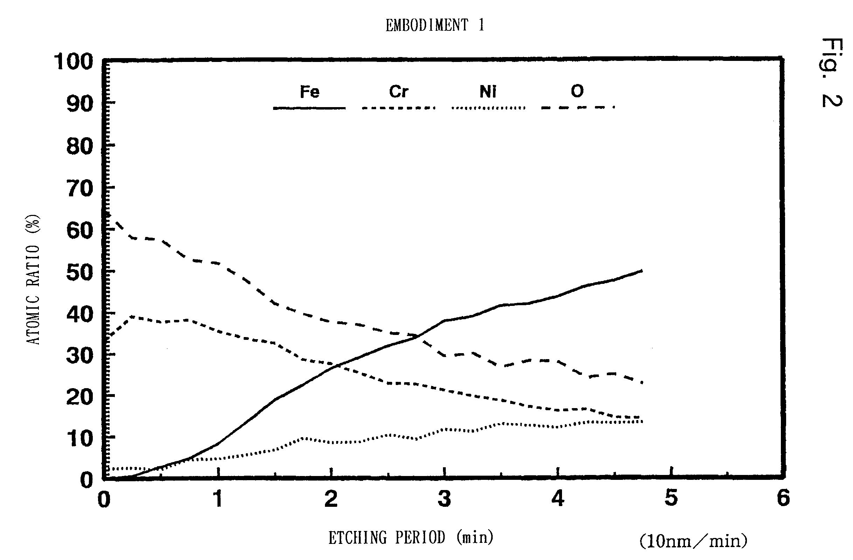

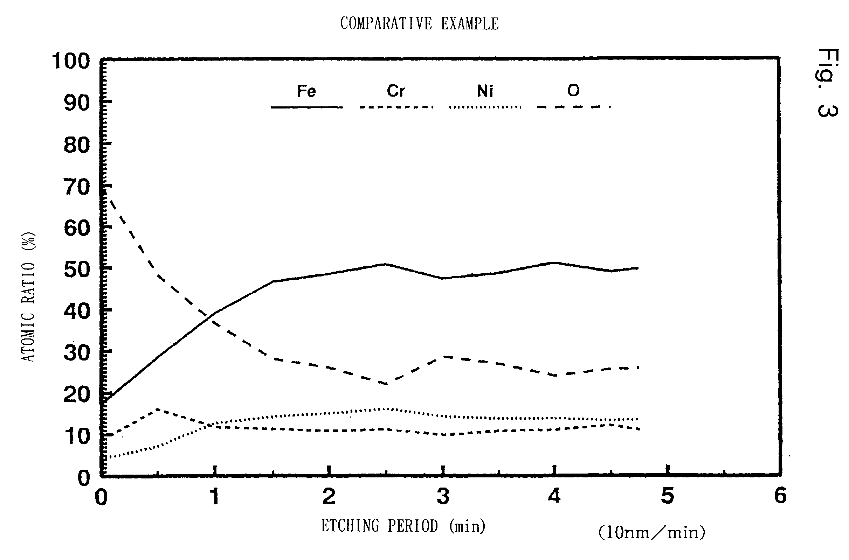

The component distribution of the weld surface in the direction of depth was ascertained by means of XPS (X-ray photoelectric distribution). The results are shown in Figures 2 and 3.

In Figures 2 and 3, the vertical axis indicates the atomic composition ratio, while the horizontal axis indicates the etching period of the surface by means of sputtering. One minute of the etching period corresponds to a film thickness of approximately 10 nm. The welded pipe samples which were obtained contained both those subjected to chromium plating treatment (Figure 2) and not subjected to chromium plating treatment (Figure 3).

As is clear from Figures 2 and 3, when welding was conducted after subjecting the ends to be welded to a chromium plating treatment, an oxide passivated film containing a large amount of chromium oxide was formed at the weld.

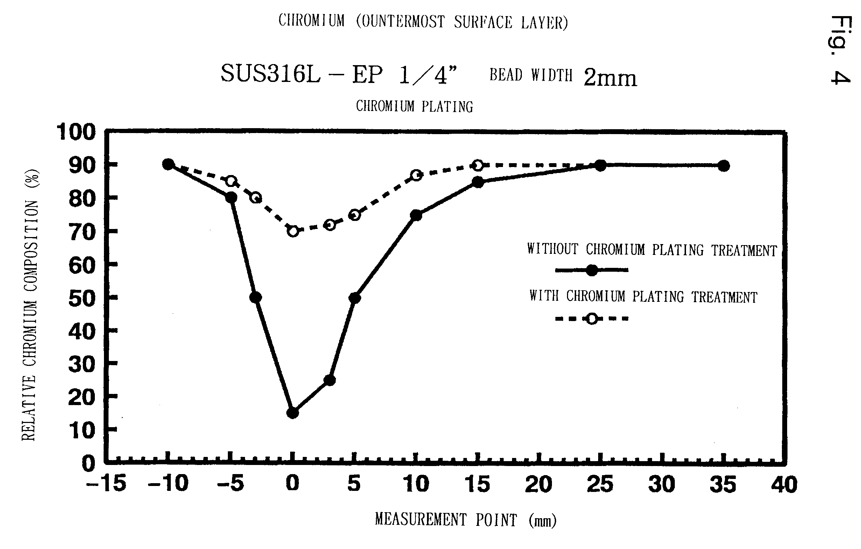

Furthermore, the proportion of the Cr component in the outermost surface was ascertained within a range of from 10 mm upstream of the weld bead to 35 mm downstream from the weld bead with respect to the back shield gas flow. The results are shown in Figure 4. In Figure 4, the horizontal axis indicates the measurement position, and the vertical axis indicates the proportion of the detected amount of Cr with respect to the total detected amounts of Fe, Cr, Ni, and Mn.

As is clear from Figure 4, the reduction in the Cr component proportion at the bead of the sample which was subjected to chromium plating processing was suppressed to approximately 20% of the background level. Clearly, by means of executing the chromium plating treatment, the proportion of the Cr component in the vicinity of the weld bead is essentially equivalent to the proportion of the Cr component at the outermost surface of the base metal.

Next, the interior of the welded pipes was filled with 2.5 kg/cm² of HCl gas containing 1.4 ppm of water, and this was allowed to stand for a period of 12 hours. After this, the pipes were cut and an observation was made of the inner surface, and corrosion was confirmed on the surface of the weld in the sample shown in Figure 3; however, in the sample of Figure 2, the weld exhibited absolutely no corrosion, as was the case with the welded parts, and it was thus discovered that an oxide passivated film having superior corrosion resistance can be formed by means of the welding method in accordance with the present invention.

### (Embodiment 2)

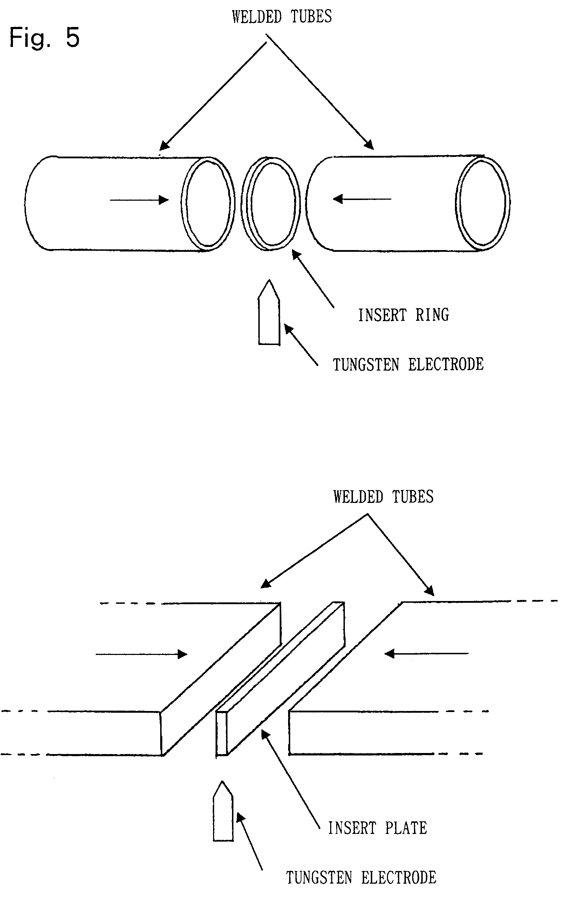

SUS316L pipes having a diameter of 1/4 inch were subjected to electropolishing, and then oxidation treatment was conducted in an atmosphere of hydrogen and argon gas containing a moisture concentration of 10 ppm, and an oxide passivated film containing a large amount of chromium was formed on the inner surfaces. Next, a chromium insert ring was inserted between the parts of the pipes which were set face to face, and welding was conducted. Stainless steel in which the proportion of chromium contained was 25% was employed in the insert ring, and the thickness thereof was 0.5 mm. The welding method is shown in Figure 5.

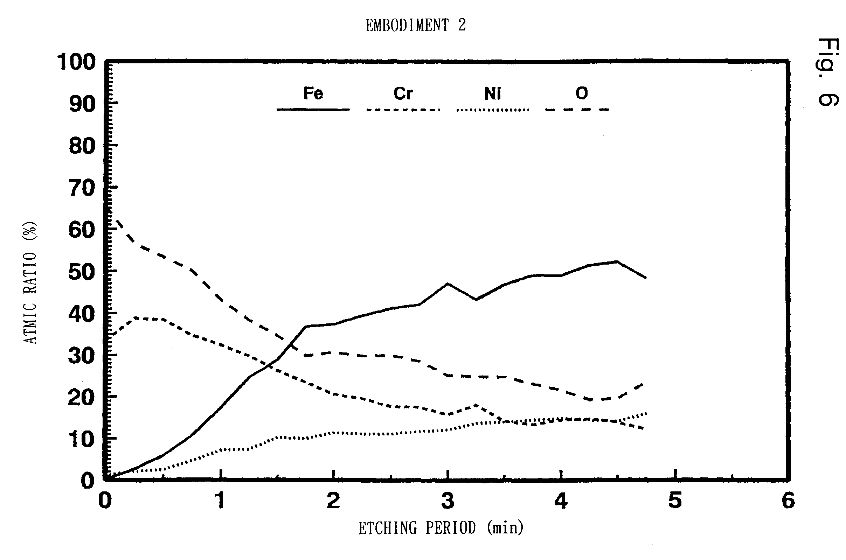

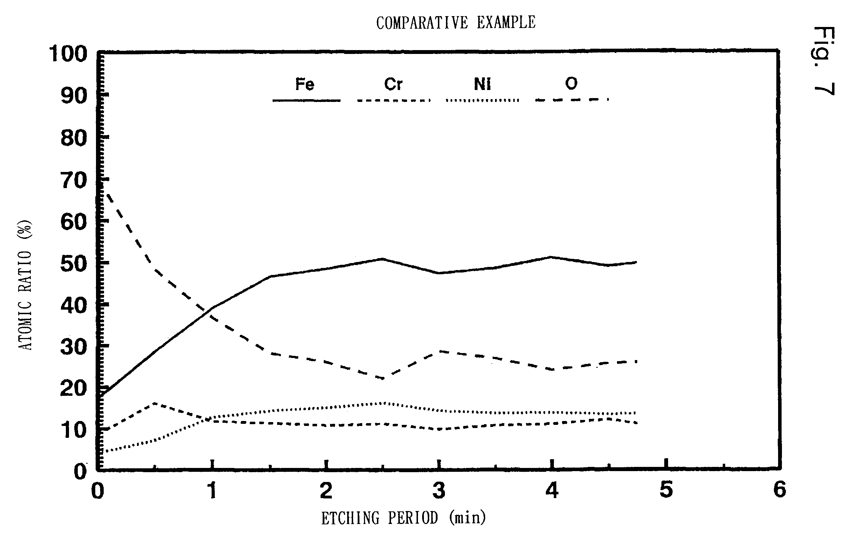

After the conclusion of welding, the pipes were cut and the component distribution at the surface of the weld in the direction of depth was ascertained by means of XPS (X-ray photo electric distribution). The results thereof were shown in Figures 6 and 7. In Figures 6 and 7, the vertical axis indicates the atomic composition ratio, while the horizontal axis indicates the etching period of the surface by means of sputtering. The welded pipe samples which were obtained included those in which insert rings containing chromium were employed (Figure 6), and in which insert rings containing chromium were not employed (Figure 7).

As is clear from Figures 6 and 7, when welding was conducted using an insert ring containing chromium at the weld, a oxide passivated film containing a large amount of chromium oxide was formed at the weld.

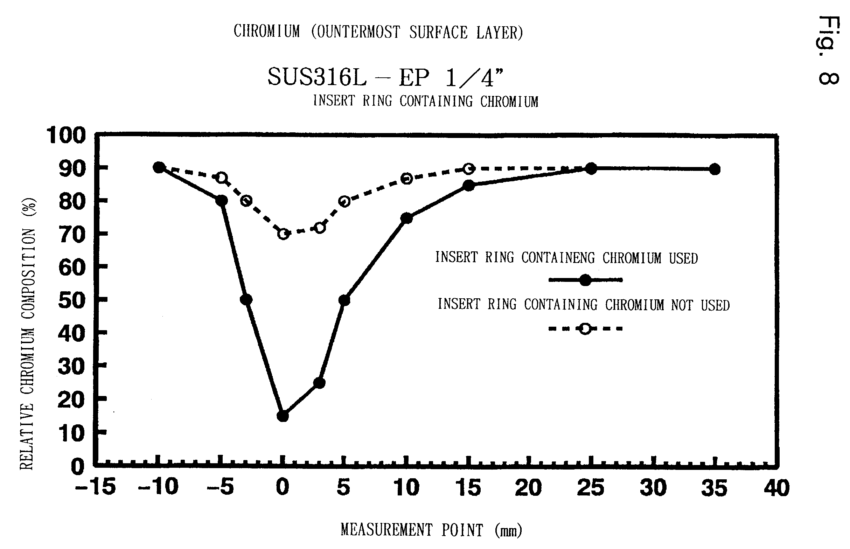

Furthermore, the Cr component proportion at the outermost surface was ascertained within a range of from 10 mm upstream from the weld bead to 35 mm downstream from the weld bead with respect to the flow of the back shield gas. The results thereof are shown in Figure 8. In Figure 8, the vertical axis indicates the measurement point, while the horizontal axis indicates the ratio of the detected amount of Cr with respect to the total detected amounts of Fe, Cr, Ni, and Mn.

As is clear from Figure 8, the reduction in the Cr component proportion at the bead of the sample at which an insert ring containing chromium was employed was suppressed to approximately 20% with respect to the background level. Clearly, by using an insert ring containing chromium, the Cr component proportion in the vicinity of the weld bead is approximately equivalent to the Cr component proportion at the outermost surface of the base metal.

Furthermore, the interior of the welded pipes was filled with 2.5 kg/cm² of HCl gas containing 1.4 ppm of water, and these were allowed to stand for a period of 12 hours. After this, the pipes were cut and the inner surfaces were examined, and the presence of corrosion was confirmed in the surface of the weld of the sample of Figure 7; however, absolutely no corrosion was observed in the surface of the weld of the sample of Figure 6, as was the case with the non-welded portions, and it was thus discovered that an oxide passivated film having superior corrosion resistance can be formed by means of the welding method in accordance with the present embodiment.

### Industrial Applicability

As described above, by means of the present invention, it is possible to conduct the passivation treatment of welds having a thick chromium oxide film, during the welding process and with out providing any special devices at the weld; it is thus possible to provide highly clean processing apparatuses, ultra high purity gas supply piping systems, and ultra pure water manufacturing and supply apparatuses.

## Claims

1. A welding method for forming a chromium oxide passivated film on a weld, characterized in that a film containing chromium is formed on ends of material to be welded having on the surface thereof a passivated oxide film formed by thermal treatment and containing chromium as a main component, said materials to be welded are then set face to face at the ends covered with said film containing chromium, and welding is conducted, and thereby, an oxide passivated film having chromium oxide as a main component thereof and having corrosion resistance and very little outgassing is formed on the surface of the weld.

2. A welding method for forming a chromium oxide passivated film on a weld in accordance with claim 1, characterized in that said materials to be welded comprise stainless steel.

3. A welding method for forming a chromium oxide passivated film on a weld in accordance with one of claims 1 and 2, characterized in that the proportion of chromium contained in said film containing chromium is 25 weight percent or more.

4. A welding method for forming a chromium oxide passivated film on a weld in accordance with one of claims 1 through 3, characterized in that said film containing chromium is coated by means of plating.

5. A welding method for forming a chromium oxide passivated film on a weld in accordance with one of claims 1 through 4, characterized in that the thickness of said film containing chromium is 0.1 µm or more.

6. A welding method for forming a chromium oxide passivated film on a weld in accordance with one of claims 1 through 5, characterized in that said film containing chromium has a length of 10 mm or less from the end surfaces which are set face to face.

7. A welding method for forming a chromium oxide passivated film on a weld, characterized in that ends of material to be welded having on the surface thereof an oxide passivated film formed by thermal treatment and containing chromium as a main component thereof are set face to face with an insert material comprising an alloy containing chromium interposed therebetween, and welding is conducted, and thereby an oxide passivated film having chromium oxide as a main component and having corrosion resistance and very little outgassing is formed on the surface of the weld.

8. A welding method for forming a chromium oxide passivated film on a weld in accordance with claim 7, characterized in that the proportion of chromium contained in said insert material is 25 weight percent or more.

9. A welding method for forming a chromium oxide passivated film on a weld in accordance with one of claims 7 and 8, characterized in that the thickness of said insert material is 5 mm or less.

10. A welded structure, characterized in that in the as-welded state, an oxide passivated film having chromium oxide as a main component thereof and having corrosion resistance and very little outgassing is formed on the surface of the weld.
